# EUROPÄISCHE PATENTANMELDUNG

(11) **EP 1 293 765 A2**
(43) Veröffentlichungstag der Anmeldung: **19.03.2003**
(21) Anmeldenummer: 02020220.6
(22) Anmeldetag: 10.09.2002
(51) Int. Cl.: G01L 25/00

(54) **Verfahren zur Kalibrierung einer Leistungsbremse eines Brennkraftmaschinen-Prüfstandes**

(30) Priorität: 18.09.2001 DE 10145867
(71) Anmelder: DEUTZ Aktiengesellschaft, 51063 Köln (DE)
(72) Erfinder: Wallenfang, Gerd, 51145 Köln (DE)

(57) **Zusammenfassung**

2.1 Zum Kalibrieren einer Messeinrichtung einer Leistungsbremse mit Pendelkörper oder mit Drehmoment-Messflansch wird an dem Pendelkörper beziehungsweise dem Drehmoment-Messflansch ein Kalibrierhebel festgeschraubt, der in einem definierten Abstand von dem Pendelkörper beziehungsweise dem Drehmoment-Messflansch eine Gewichteschale trägt, auf die je nach Bremsengröße beziehungsweise Bremsenleistung Gewichte aufgelegt und heruntergenommen werden müssen.
2.2 Erfindungsgemäß wird zum Kalibrieren des Kraftmessgliedes 6 oder des Drehmoment-Messflansches 6a ein Kalibrierhebel 8, 8a an dem Pendelkörper 4 beziehungsweise dem Drehmoment-Messflansch 6a befestigt, auf den in einem definierten Abstand zu dem Pendelkörper 4 beziehungsweise dem Drehmoment-Messflansch 6a eine einstellbare, von einem Krafterzeuger aufgebrachte Kraft eingeleitet wird und von einer dem Krafterzeuger nachgeschalteten Referenzlastmesszelle 11 der Wert der Kraft gemessen wird.

## Beschreibung

Die Erfindung betrifft eine Kalibriereinrichtung für eine Messeinrichtung einer Leistungsbremse, insbesondere eines Prüfstandes für eine Brennkraftmaschine, wobei an einem Messarm eines Pendelkörpers der Leistungsbremse die sich an einem Fundament abstützende als Kraftmessglied ausgebildete Messeinrichtung angreift oder die Messeinrichtung als Drehmoment-Messflansch ausgebildet ist, der an der Welle der Leistungsbremse angebracht ist, und zum Kalibrieren der Messeinrichtung ein Kalibrierhebel an dem Pendelkörper beziehungsweise dem Drehmoment-Messflansch befestigt wird, auf den in einem definierten Abstand zu dem Pendelkörper beziehungsweise dem Drehmoment-Messflansch eine Kraft eingeleitet wird. Weiterhin betrifft die Erfindung entsprechende Verfahren zum Kalibrieren der Messeinrichtung.

Aus der EP 0 192 799 B1 ist ein Verfahren zum Betreiben eines Prüfstandes für Brennkraftmaschinen, sowie eine für den Prüfstand bestimmte Leistungsbremse bekannt. In diesem Dokument sind der grundsätzliche Aufbau des Prüfstandes und verschiedene Messmethoden zur Durchführung statischer und dynamischer Messungen an der Brennkraftmaschine beschrieben.

Weiterhin ist dem Fachmann bekannt, dass zum Kalibrieren einer Messeinrichtung einer solchen Leistungsbremse an dem Pendelkörper beziehungsweise an dem Drehmoment-Messflansch ein Kalibrierhebel festgeschraubt wird, der in einem definierten Abstand von dem Pendelkörper beziehungsweise von dem Drehmoment-Messflansch eine Gewichteschale trägt, auf die je nach Bremsengröße beziehungsweise Bremsenleistung Gewichte von einigen hundert Kilogramm mehrere Male aufgelegt und wieder heruntergenommen werden müssen. Der Kraftaufwand und das Unfallrisiko bei dieser Tätigkeit sind entsprechend hoch.

Der Erfindung liegt die Aufgabe zugrunde, Kalibriereinrichtungen und Verfahren zum Kalibrieren einer Messeinrichtung für eine Leistungsbremse anzugeben, die gegenüber dem Stand der Technik sicherer und einfacher zu handhaben sind.

Diese Aufgabe wird gemäß den Verfahren der unabhängigen Patentansprüche dadurch gelöst, dass zum Kalibrieren des Kraftmessgliedes beziehungsweise des Drehmoment-Messflansches ein Kalibrierhebel an dem Pendelkörper beziehungsweise dem Drehmoment-Messflansch befestigt wird, auf den in einem definierten Abstand zu dem Pendelkörper beziehungsweise dem Drehmoment-Messflansch eine einstellbare, von einem Krafterzeuger aufgebrachte Kraft eingeleitet wird und von einer dem Krafterzeuger nachgeschalteten Referenzlastmesszelle der Wert der Kraft gemessen wird. Die hierzu gehörenden Kalibriereinrichtungen sind entsprechend ausgebildet. Durch diese Ausbildungen und diese Verfahren sind einerseits der personelle Aufwand beim Kalibrieren einer derartigen Messvorrichtung erheblich reduziert, indem zwar vergleichbar grundsätzlich die Einrichtung in Form des Kalibrierhebels, Krafterzeugers und der Referenzlastmesszelle an den Prüfstand herangeschafft und montiert werden muss, anschließend aber der Kalibriervorgang durch den Wegfall des mehrfachen Auf- und Ablegen von Gewichten auf die Gewichtsschale wesentlich vereinfacht ist. Hierdurch ist auch das Unfallrisiko erheblich reduziert.

In Weiterbildung wird die aufzubringende Kraft von einem pneumatischen Druckluftzylinder, der insbesondere als reibungsarmer Rollmembran-Zylinder ausgebildet ist, erzeugt. Dies ist die bevorzugte Ausführungsform, da zum einen im Prüfstandsbereich Druckluft bereitsteht und entsprechende Druckluftzylinder handelsüblich erhältlich sind. Insofern kann hier im wesentlichen auf vorhandene Einrichtungen beziehungsweise Serienteile zugegriffen werden.

In weiterer Ausgestaltung der Erfindung ist vorgesehen, dass die Kraft von einem hydraulischen Krafterzeuger bereitgestellt wird. Diese Ausführungsform wird insbesondere dann vorgesehen, wenn sehr hohe Kräfte erzeugt werden müssen, die durch pneumatische Druckluftzylinder nicht oder nur unter hohem Aufwand bereitgestellt werden können. Dies ist insbesondere bei Leistungsbremsen für Großmotoren der Fall. Dabei kann der hydraulische Krafterzeuger ein automatisiertes System, bestehend aus Hydraulikzylinder, Pumpe, Tank und Steuerungsvorrichtung sein oder aber auch ein manuelles System, beispielsweise in Form eines hoch belastbaren hydraulischen Wagenhebers.

In Weiterbildung der Erfindung wird der Krafterzeuger von einem Kraftregler gesteuert. Hierdurch wird der Bedienungskomfort erheblich verbessert. Der Bediener gibt dann nur die gewünschte Kraft vor, der Regler steuert den Luftdruck oder gegebenenfalls den Hydraulikdruck so, dass die gewünschte Kraft exakt erreicht wird. Dadurch werden Reibung, Kriecheffekte oder ähnliches ausgeregelt.

Der Drehmoment-Messflansch kann grundsätzlich mit Hilfe eines einarmigen Kalibrierhebels und einem Krafterzeuger kalibriert werden. Im allgemeinen aber wird der Drehmoment-Messflansch, der eine biegekraftfreie Momenteinleitung erfordert, mit Hilfe eines doppelarmigen Kalibrierhebels und zwei Krafterzeugern kalibriert. Hierzu wird der erste Krafterzeuger auf dem Fundament aufgestellt. Der zweite Krafterzeuger, der von oben auf den zweiten Arm des Kalibrierhebels drücken muss, wird entweder an der Decke der Prüfbox, oder an einer auf dem Fundament festgeschraubten Halterung befestigt und ist durch Kraftumleitung so ausgebildet, dass er an dem zweiten Arm zieht.

Weitere vorteilhafte Ausgestaltungen der Erfindung sind der Zeichnungsbeschreibung zu entnehmen, in dem ein in den Figuren dargestelltes Ausführungsbeispiel der Erfindung beschrieben ist.

Es zeigen:

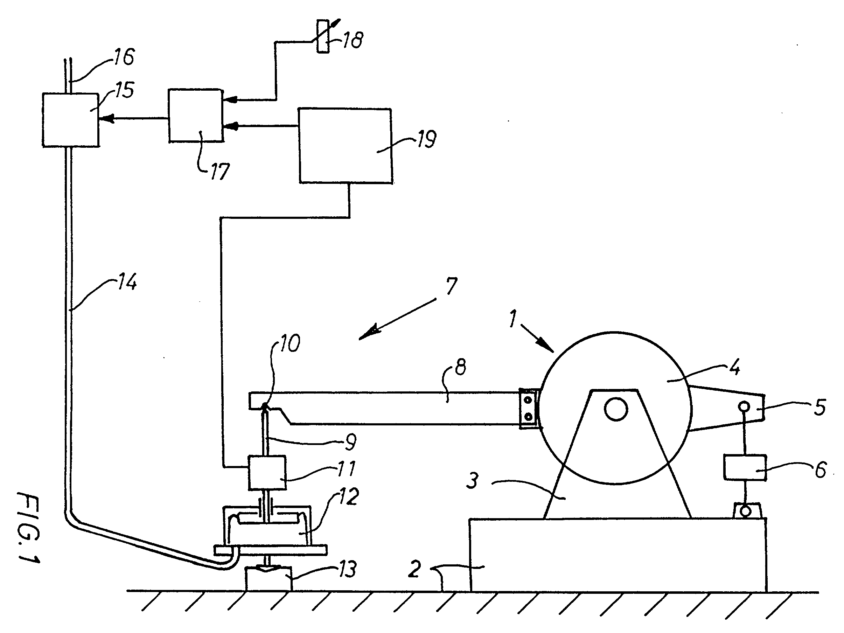

- Figur 1:: ein Prinzipbild der gesamten Kalibrierungseinrichtung und
- Figur 2:: ein Prinzipbild der gesamten Kalibrierungseinrichtung in einer weiteren Ausführungsform und
- Figur 3:: die erfindungsgemäße Steuervorrichtung.

Die Leistungsbremse 1 ist Bestandteil eines Prüfstandes für eine Brennkraftmaschine beliebiger Größenordnung. Die Kurbelwelle der Brennkraftmaschine ist dabei über eine Welle mit der Messwelle der Leistungsbremse 1 verbunden, so dass das von der Brennkraftmaschine auf die Kurbelwelle aufgebrachte Moment auf die Messwelle übertragen wird und messbar ist. Die Leistungsbremse 1 weist dazu einen auf einem Fundament 2 befestigten Träger 3 auf, an dem ein Pendelkörper 4 schwenkbar befestigt ist. Der Pendelkörper 3 weist einen Messarm 5 auf, an dem ein Kraftmessglied 6 angreift, dass sich auf dem Fundament 2 abstützt. Der Messarm 5 und das Kraftmessglied 6 sind in dem Ausführungsbeispiel außerhalb des Pendelkörpers liegend dargestellt, können aber auch in geeigneter Art und Weise in diesen zumindest teilweise integriert sein. Beim Prüfbetrieb der Leistungsbremse wirkt die Messwelle auf den Pendelkörper 3 so ein, dass entsprechend dem aufgebrachten Moment ein entsprechender Wert an dem Kraftmessglied gemessen wird. Um dieses Kraftmessglied 6 zu eichen beziehungsweise zu kalibrieren, ist die Kalibriereinrichtung 7 vorgesehen. Die Kalibriereinrichtung 7 wird bedarfsweise an die Leistungsbremse 1 anmontiert und ist grundsätzlich für eine Vielzahl von Leistungsbremsen insbesondere einer Prüfstandseinrichtung verwendbar. Hierzu weist die Kalibriereinrichtung 7 eine Anzahl von leicht zu transportierenden und zusammenzubauenden Komponenten auf. An den Pendelkörper 4 wird für den Kalibriervorgang ein Kalibrierhebel 8 montiert, an den in einem definierten Abstand von der Mittelachse des Pendelkörpers ein Druckbalken 9 angreift. Dieser Druckbalken 9 weist eine Spitze auf, die in eine Ausnehmung 10 des Kalibrierhebels 8 eingreift. Der Druckbalken 9 ist unter Einschaltung einer Referenzlastmesszelle 11 an einen pneumatischen Druckluftzylinders 12 angekoppelt, der sich über ein Fußgelenk 13 auf dem Fundament 2 abstützt. Von dem pneumatischen Druckluftzylinder 12 wird beim Kalibriervorgang eine definierte Druckkraft auf den Druckbalken 9 und somit ein Moment auf den Pendelkörper 4 ausgeübt, so dass entsprechend diesem Moment eine Kraft an dem Kraftmessglied 6 gemessen wird und gegebenenfalls das Kraftmessglied 6 bei einer Abweichung der angezeigten Kraft von der Sollkraft, die auf dem nachfolgend erläuterten Kraftanzeigegerät 19 ausgegeben wird, nachjustiert werden kann. Der pneumatische Druckluftzylinder 12 ist mit einer Druckluftzuführleitung 14 verbunden, die über ein Drucksteuerventil 15 mit einer insbesondere ortsfesten Druckluftleitung 16 verbindbar ist. Das Druckluftsteuerventil 15 wird von einem Kraftregler 17 angesteuert, wobei der Kraftregler 17 mit einer Kraftsollwerteinstellvorrichtung 18 und dem Kraftanzeigegerät 19 verschaltet ist. Das Kraftanzeigegerät 19 ist wiederum mit der Referenzlastmesszelle verschaltet.

Um eine geringe Reibung und eine sogenannte Stick-Slip-freie Bewegung zu ermöglichen, sind Druckluftzylinder 12 mit Langhub-Rollmembranen und Kugelbuchsenführung der Kolbenstange sinnvoll; großflächige Hubkissen sind ebenfalls vorstellbar. Durch Steuern des Luftdruckes in dem Druckluftzylinder kann die erzeugte Kraft in weiten Grenzen verändert werden.

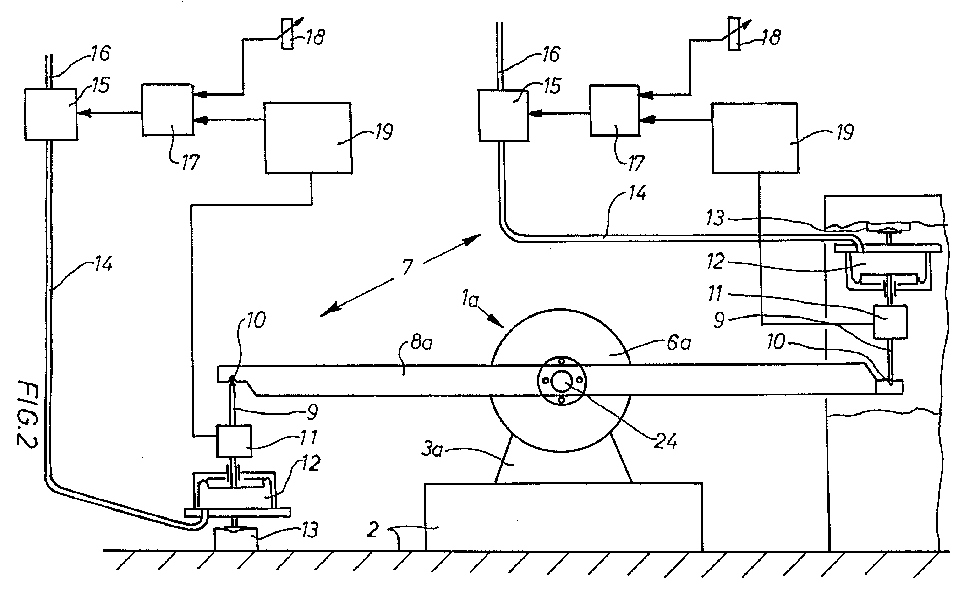

Bei dem Ausführungsbeispiel gemäß Figur 2 wird ein Drehmoment-Messflansch 6a, der eine biegekraftfreie Momenteinleitung erfordert, mit Hilfe eines doppelarmigen Kalibrierhebels 8a und zwei Krafterzeugern kalibriert. Hierzu wird der erste Krafterzeuger wie zuvor beschrieben auf dem Fundament 2 aufgestellt. Der zweite Krafterzeuger, der von oben auf den zweiten Arm des Kalibrierhebels 8a drücken muss, wird entweder - wie dargestellt - an der Decke der Prüfbox, oder an einer auf dem Fundament 2 festgeschraubten Halterung befestigt und ist durch Kraftumleitung so ausgebildet, dass er an dem zweiten Arm zieht. Ein Drehmoment-Messflansch 6a wird eingesetzt, wenn die Leistungsbremse 1a ein auf dem Fundament 2 über einen Träger 3a feststehendes Gehäuse, beispielsweise bei einer generatorischen Leistungsbremse 1a, aufweist und somit kein Messarm verwendet werden kann. Der Drehmoment-Messflansch 6a ist dann zwischen der Kurbelwelle der Brennkraftmaschine und der Welle 24 (Ankerwelle) der Leistungsbremse eingebaut und misst das von der Brennkraftmaschine an die Welle 24 abgegebene Moment.

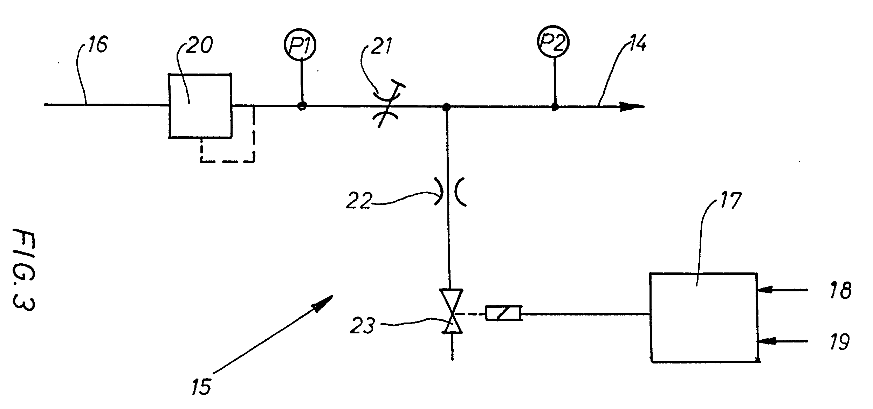

In Figur 3 ist die Funktion des Drucksteuerventils 15 mit dem Kraftregler 17 dargestellt. Das Drucksteuerventil 15 weist einen internen oder externen einstellbaren Druckregler 20 auf, der an die Druckluftleitung 16 angeschlossen ist. Auf der Ausgangsseite des Druckreglers 20 ist eine gegebenenfalls einstellbare erste Drossel 21 eingeschaltet, die unter Einschaltung mit der Druckluftzuführleitung 14 und über eine Abzweigleitung mit einer Zweitdrossel 22 verschaltet ist. Der Zweitdrossel 22 folgt als weiteres Bestandteil des Drucksteuerventils 15 ein Taktventil 23, das von dem Kraftregler 17 angesteuert wird. Dem Kraftregler 17 ist der Sollwert der Kraftsollwerteinstellvorrichtung 18 und der Istwert des Kraft-Anzeigegerätes 19 zugeführt. In dem Ausführungsbeispiel gemäß Figur 2 können zwei Kraftsteuerregler 17 vorhanden sein oder aber auch ein beide Drucksteuerventile 15 ansteuernder Kraftregler 17 mit zwei Ausgängen.

Die Funktionsweise ist folgende: Aus dem Druckluftnetz wird über die Druckluftleitung 16 durch den Druckregler 20 ein konstanter, einstellbarer Druck P1 erzeugt. Dieser Druck P1 wird über die einstellbare Drossel 21 dem Krafterzeuger über die Druckluftzuführleitung 14 als Druck P2, der gleich oder ungleich dem Druck P1 sein kann (wie nachfolgend erläutert), zugeführt. Weil der Krafterzeuger keinen Luftverbrauch hat, ist bei dauernd geschlossenem Taktventil 23 P2 gleich P1. Bei dauernd geöffnetem Taktventil 23 strömt Luft über die Zweitdrossel 22 ab, so dass P2 kleiner P1 wird. Die Drossel 21 ist so eingestellt, dass P2 gleich 0,9 x P1 ist. Der Kraftregler 17 kann nun durch Takten des Taktventils 23 mit unterschiedlichen Tastverhältnissen den Luftstrom über die Zweitdrossel 22 von 0 % bis 100 % ändern und dadurch den Steuerdruck für den pneumatischen Druckluftzylinder 12 feinfühlig zwischen 1 x P1 und 0,9 x P1 verändern. Der Bediener stellt die Kraft grob per Hand an dem Druckregler 20 ein, die Feinausregelung übernimmt dann der Kraftregler 17 über die Tastverhältnissteuerung. Die Verstellbarkeit ist mit diesem System auf einen Wert feiner als 0,05% möglich. Dieses System ist selbstverständlich auch bei einem hydraulischen Krafterzeuger einsetzbar.

## Patentansprüche

1. Verfahren zum Kalibrieren einer Messeinrichtung für eine Leistungsbremse (1), insbesondere eines Prüfstandes für eine Brennkraftmaschine, wobei an einen Messarm (5) eines Pendelkörpers (4) der Leistungsbremse (1) die sich an einem Fundament (2) abstützende als Kraftmessglied (6) ausgebildete Messeinrichtung angreift und zum Kalibrieren des Kraftmessgliedes (6) ein Kalibrierhebel (8) an dem Pendelkörper (4) befestigt wird, auf den in einem definierten Abstand zu dem Pendelkörper (4) eine einstellbare von einem Krafterzeuger aufgebrachte Kraft eingeleitet wird und von einer dem Krafterzeuger nachgeschalteten Referenzlastmesszelle (11) der Wert der Kraft gemessen wird.

2. Verfahren zum Kalibrieren einer Messeinrichtung für eine Leistungsbremse (1a), insbesondere eines Prüfstandes für eine Brennkraftmaschine, wobei die Messeinrichtung als Drehmoment-Messflansch (6a) ausgebildet ist, der an der Welle (24) der Leistungsbremse (1a) angebracht ist und zum Kalibrieren des Drehmoment-Messflansches (6a) ein Kalibrierhebel (8a) an dem Drehmoment-Messflansch (6a) befestigt wird, auf den in einem definierten Abstand zu dem Drehmoment-Messflansch (6a) eine einstellbare von einem Krafterzeuger aufgebrachte Kraft eingeleitet wird und von einer dem Krafterzeuger nachgeschalteten Referenzlastmesszelle (11) der Wert der Kraft gemessen wird.

3. Verfahren nach Anspruch 1 oder 2,
**dadurch gekennzeichnet, dass** die Kraft von einem pneumatischen Druckluftzylinder (12) erzeugt wird.

4. Verfahren nach Anspruch 1 oder 2,
**dadurch gekennzeichnet, dass** die Kraft von einem hydraulischen Krafterzeuger erzeugt wird.

5. Verfahren nach einem der vorherigen Ansprüche,
**dadurch gekennzeichnet, dass** der Krafterzeuger von einem Kraftregler (17) gesteuert wird.

6. Kalibriereinrichtung für eine Messeinrichtung einer Leistungsbremse (1), insbesondere eines Prüfstandes für eine Brennkraftmaschine, wobei an einem Messarm (5) eines Pendelkörpers (4) der Leistungsbremse (1) die sich an einem Fundament (2) abstützende als Kraftmessglied (6) ausgebildete Messeinrichtung angreift und zum Kalibrieren des Kraftmessgliedes (6) ein Kalibrierhebel (8) an dem Pendelkörper (4) befestigt ist, auf den in einem definierten Abstand zu dem Pendelkörper (4) eine einstellbare von einem Krafterzeuger aufgebrachte Kraft eingeleitet ist und von einer dem Krafterzeuger nachgeschalteten Referenzlastmesszelle (11) der Wert der eingestellten Kraft messbar ist.

7. Kalibriereinrichtung für eine Messeinrichtung einer Leistungsbremse (1), insbesondere eines Prüfstandes für eine Brennkraftmaschine, wobei an der Welle (24) der Leistungsbremse (1) eine als Drehmoment-Messflansch (6a) ausgebildete Messeinrichtung angreift und zum Kalibrieren des Drehmoment-Messflansches (6a) ein Kalibrierhebel (8a) an dem Drehmoment-Messflansch (6a) befestigt ist, auf den in einem definierten Abstand zu dem Drehmoment-Messflansch (6a) eine einstellbare von einem Krafterzeuger aufgebrachte Kraft eingeleitet ist und von einer dem Krafterzeuger nachgeschalteten Referenzlastmesszelle (11) der Wert der eingestellten Kraft messbar ist.

8. Kalibriereinrichtung nach Anspruch 6 oder 7,
**dadurch gekennzeichnet, dass** der Krafterzeuger ein pneumatischer Druckluftzylinder (12) ist.

9. Kalibriereinrichtung nach Anspruch 6 oder Anspruch 7,
**dadurch gekennzeichnet, dass** ein Kraftregler (17) den Krafterzeuger steuert.
